# EUROPEAN PATENT APPLICATION

(11) **EP 4 730 231 A1**
(43) Date of publication of application: **22.04.2026**
(21) Application number: 24853677.3
(22) Date of filing: 09.08.2024
(51) Int. Cl.: G06Q 10/0631

(54) **CHARGING PLAN GENERATION METHOD, ELECTRONIC DEVICE AND STORAGE MEDIUM**

(30) Priority: 16.08.2023 CN 202311038005
(71) Applicant: Autel Digital Power Co., Ltd., Shenzhen, Guangdong 518000 (CN)
(72) Inventor: LIANG, Lina, Shenzhen, Guangdong 518000 (CN); ZHANG, Yuqin, Shenzhen, Guangdong 518000 (CN); ZHANG, Jinlei, Shenzhen, Guangdong 518000 (CN); GUAN, Lei, Shenzhen, Guangdong 518000 (CN)
(74) Representative: Harris, Oliver John Richard
(86) International application number: PCT/CN2024/110912
(87) International publication number: WO 2025/036267

(57) **Abstract**

The present invention discloses a charging plan generation method, an electronic device and a storage medium. The method includes: acquiring historical charging data; determining charging features on the basis of the historical charging data; determining charging prediction data on the basis of the charging features and a preset charging prediction model; and generating a charging plan on the basis of the historical charging data and the charging prediction data. By mining and analyzing the historical charging data, the charging features representing a charging action of a user is obtained, and a charging demand of the user is predicted on the basis of the charging features. In the process, personal privacy information of the user is not involved, and the blockage problem of difficulty in obtaining the charging demand of the user can be solved. Furthermore, by predicting user preferences, users are divided into groups, and diversified and targeted charging plans are generated for different user groups, solving the problem that existing charging strategies are difficult to meet the charging demands of different users.

## Description

### CROSS-REFERENCE TO RELATED APPLICATIONS

The present invention claims the priority right of the Chinese patent invention filed with the China Patent Office on August 16, 2023, with the invention number 202311038005.9 and the invention name "CHARGING PLAN GENERATION METHOD, ELECTRONIC DEVICE AND STORAGE MEDIUM", which is incorporated herein by reference in its entirety.

### TECHNICAL FIELD

The present invention relates to the technical field of charging, and particularly relates to a charging plan generation method, an electronic device and a storage medium.

### BACKGROUND

With the rapid development of the new energy vehicle industry, the deployment, construction, and safe and reasonable use of charging stations have gradually become the focus of attention in the electric vehicle industry.

However, a plug-and-charge efficiency priority mode is basically used for the current use of charging stations, which is relatively single and lacks customized generation of charging plans according to charging demands of users, thus making it difficult to meet the charging demands of different users in different scenarios.

### SUMMARY

The present invention provides a charging plan generation method, an electronic device and a storage medium to solve the problem in the prior art that the charging method is relatively single, and there is a lack of customized generation of charging plans for charging demands of users, which makes it difficult to meet the charging demands of different users in different scenarios.

An embodiment of the present invention provides a charging plan generation method including:
acquiring historical charging data;
determining charging features on the basis of the historical charging data;
determining charging prediction data on the basis of the charging features and a preset charging prediction model; and
generating a charging plan on the basis of the historical charging data and the charging prediction data.

Optionally, the generating a charging plan on the basis of the historical charging data and the charging prediction data includes:
determining a target charging strategy model according to the historical charging data and the charging prediction data; and
generating the charging plan according to the target charging strategy model.

Optionally, the determining a target charging strategy model according to the historical charging data and the charging prediction data includes:
calculating a first charging cost based on a preset cost priority model according to the historical charging data and the charging prediction data;
calculating a second charging cost based on a preset efficiency priority model according to the historical charging data and the charging prediction data;
judging whether a difference between the first charging cost and the second charging cost is greater than a preset threshold;
if greater than, determining the target charging strategy model as the cost priority model; and
if less than, determining the target charging strategy model as the efficiency priority model.

Optionally, the calculating a first charging cost based on a preset cost priority model according to the historical charging data and the charging prediction data includes:
generating a first charging plan based on the preset cost priority model according to the historical charging data and the charging prediction data; and
calculating the charging cost of the first charging plan to determine the first charging cost.

Optionally, the generating a first charging plan based on the preset cost priority model according to the historical charging data and the charging prediction data includes:
determining constraint conditions of the cost priority model according to the historical charging data and the charging prediction data;
determining an objective function of the cost priority model; and
generating the first charging plan based on an operations research optimization solver according to the objective function and the constraint conditions.

Optionally, the determining constraint conditions of the cost priority model according to the historical charging data and the charging prediction data includes:
determining, according to the charging prediction data, that the constraint conditions include at least one of:
delivered power being less than or equal to predicted receivable maximum power;
charging in a fast-charging mode when the charged electricity quantity is lower than predicted guaranteed electricity quantity; and
within the predicted charging time, the charged electricity quantity being greater than or equal to predicted charging electricity quantity;
where the charging prediction data includes the predicted receivable maximum power, the predicted guaranteed electricity quantity, the predicted charging time and the predicted charging electricity quantity.

Optionally, the calculating a second charging cost based on a preset efficiency priority model according to the historical charging data and the charging prediction data includes:
generating a second charging plan based on the preset efficiency priority model according to the historical charging data and the charging prediction data; and
calculating the charging cost of the second charging plan to determine the second charging cost.

Optionally, the generating a second charging plan based on the preset efficiency priority model according to the historical charging data and the charging prediction data includes:
determining constraint conditions of the efficiency priority model according to the historical charging data and the charging prediction data; and
generating the second charging plan based on a power load balancing allocation algorithm according to the constraint conditions.

Optionally, the determining a target charging strategy model according to the historical charging data and the charging prediction data includes:
determining a historical charging curve according to the historical charging data;
determining a similarity between the historical charging curve and a standard charging curve;
judging whether the similarity is greater than a preset threshold; and
when the similarity is greater than the threshold, determining the target charging strategy model.

Optionally, the generating the charging plan according to the charging strategy model includes:
determining a charging curve estimation model according to the target charging strategy model;
determining a predicted battery state value according to the charging curve estimation model; and
generating the charging plan according to the predicted battery state value and the standard charging curve.

Optionally, the determining a target charging strategy model according to the historical charging data and the charging prediction data includes:
determining a charging time distribution according to the historical charging data;
determining a similarity between the charging time distribution and a charging peak time distribution;
judging whether the similarity is greater than a preset threshold; and
when the similarity is greater than the threshold, determining the target charging strategy model.

Optionally, the generating the charging plan according to the target charging strategy model includes:
judging whether a charging period is the charging peak period;
if so, determining the charging power of the charging period as first power;
if not, determining the charging power of the charging period as second power, where the first power is less than the second power; and
generating the charging plan according to the charging period and the charging power.

Optionally, the method further includes, before the determining charging prediction data on the basis of the charging features and a preset charging prediction model:
generating the charging prediction model;
where the charging prediction model includes a guaranteed electricity quantity prediction model and/or a charging electricity quantity prediction model.

Optionally, the generating the charging electricity quantity prediction model includes:
determining maximum charging electricity quantity and average charging electricity quantity of the charging features as output label values;
constructing a sample dataset according to the charging features; and
generating the charging electricity quantity prediction model based on a binary classification algorithm according to the sample dataset.

Optionally, the generating the guaranteed electricity quantity prediction model includes:
constructing a sample dataset according to the charging features; and
determining a plurality of clusters based on a clustering algorithm according to the sample dataset; and
determining guaranteed electricity quantity of the clusters according to features of the clusters to generate the guaranteed electricity quantity prediction model.

An embodiment of the present invention provides an electronic device including a memory, a processor and a computer program stored in the memory and capable of running on the processor, where the processor, when executing the computer program, implements a method as described in the first aspect.

An embodiment of the present invention provides a storage medium, where the storage medium stores a computer program, and the computer program implements the method according to the first aspect when executed by a processor.

The technical solution of the present invention can achieve the following technical effects. In the present embodiment, through mining and analysis of historical charging data, charging features representing charging habits of users are obtained, preference types of the user are predicted according to the charging features, charging demands of the users are mined, and a customized charging plan is generated correspondingly to meet the charging demands of the users.

### BRIEF DESCRIPTION OF THE DRAWINGS

In order to explain the embodiments of the present invention or the technical solutions in the prior art more clearly, a brief description will be given below of the drawings which need to be used in the embodiments. It is obvious that the drawings in the following description are only some embodiments of the present invention, and it would have been obvious for a person skilled in the art to obtain other drawings according to these drawings without involving any inventive effort.
FIG. 1 is a schematic diagram of an application environment of a charging plan generation method according to an embodiment of the present invention;
FIG. 2 is a schematic flowchart of a charging plan generation method according to an embodiment of the present invention;
FIG. 3 is a schematic flowchart of generating a charging plan according to historical charging data and charging prediction data according to an embodiment of the present invention;
FIG. 4 is a statistical diagram of time distribution of charging power of a charging station according to an embodiment of the present invention;
FIG. 5 is a schematic flowchart of a method for generating a first charging plan based on a preset cost priority model according to an embodiment of the present invention; and
FIG. 6 is a schematic diagram of an architecture of a computer device according to an embodiment of the present invention.

### DETAILED DESCRIPTION OF THE INVENTION

The technical solutions in the embodiments of the present invention will be clearly and completely described below in conjunction with the accompanying drawings in the embodiments of the present invention. It is apparent that the described embodiments are only part of the embodiments of the present invention, rather than all the embodiments. Based on the embodiments of the present invention, all other embodiments obtained by a person skilled in the art without making creative work shall fall within the protection scope of the present invention.

First, to introduce the method of the present invention, the following definitions are provided for some abbreviations and key terms involved hereinafter.

Historical charging data: data included in historical charging orders of the device to be charged, including charging electricity quantity, charging power, charging date, charging duration, charging gun unplugging duration, charging process curve, etc.

Charging plan: a charging power timing table allocated to charging devices, based on which the charging devices charge the battery with set power at set time.

Charging feature: user charging data that is not directly obtained but has certain representativeness, derived through feature mining based on statistical methods using historical charging data.

Charging strategy model: a model framework structure for generating specific charging plans to meet charging demands based on different charging demands of different types of users in different scenarios.

Charging prediction data: prediction data generated by the charging prediction model according to charging features to judge the charging demands of the user this time.

Below is an introduction to the application environment of the charging plan generation method provided by the embodiments of the present invention.

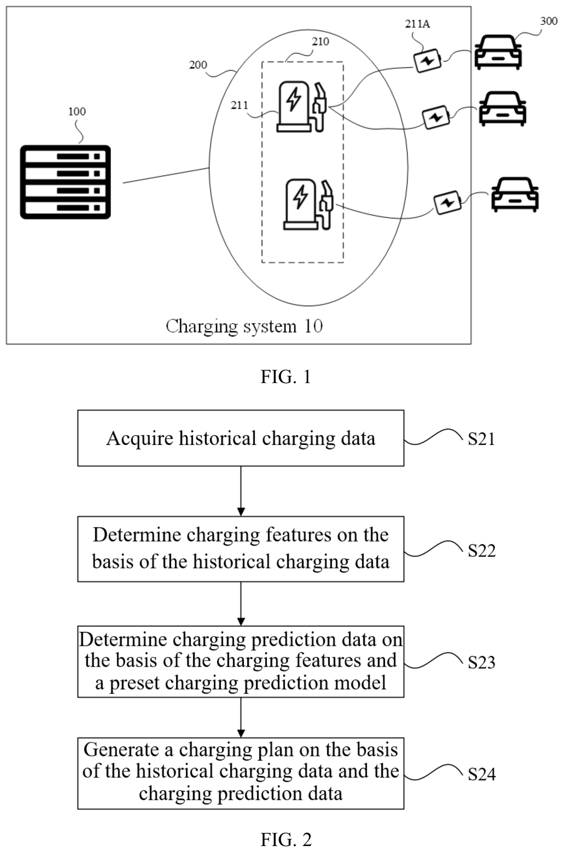

The method provided by the embodiment of the present invention can be applied to the charging system as shown in FIG. 1, FIG. 1 is a schematic diagram of an application environment of a charging plan generation method according to an embodiment of the present invention. The charging system 10 includes a charging management device 100 and a charging station 200. The charging station 200 includes at least one group 210, the group 210 includes at least one charging pile 211, the charging pile 211 includes at least one charging gun 211A, and each charging gun 211A can match one user at the same time to charge the device to be charged of the user, such as a new energy electric vehicle 300.

The charging pile 211 and the charging gun 211A can provide charging outputs with different powers, which is specifically controlled by the charging management device 100 over the delivered power of the charging pile 211 and the charging gun 211A to realize charging power adjustment for the electric vehicle 300.

The charging management device 100 is communicatively connected to the charging station 200 for managing the charging station 200. The charging management device 100 may be composed of one or more workstations or servers, and realizes monitoring, data collection, query of the charging station 200, the charging piles 211 and the charging guns 211A, and processes and analyzes the data. The data that the charging management device 100 can acquire includes charging information of the charging devices such as the charging pile 211 including the charging gun 211A, device information of devices being charged such as batteries or new energy electric vehicles 300 electrically connected to the charging devices, and historical charging information corresponding to the devices being charged.

In one embodiment, the charging station 200 is a facility providing charging services for the electric vehicles 300 in cities, highways, residential areas or commercial areas. The charging pile 211 under the charging station 200 is connected to the electric vehicle 300 through the charging gun 211A. The user of the electric vehicle 300 establishes a communication connection with the charging management device 100, and the charging management device 100 issues instructions to the charging pile 211 to charge the electric vehicle 300 of the user.

In this process, the charging management device 100 obtains the historical charging data of the electric vehicle 300 by acquiring a device identification code of the electric vehicle 300, predicts the charging preference and the current charging demand of the electric vehicle 300 according to the historical charging data, thereby generating a customized charging plan, and issues the charging plan to the charging pile 211 to charge the electric vehicle 300 according to the charging plan. Without requiring access to personal data of users, data mining is conducted to obtain charging preferences and meet charging demands of the users while safeguarding their privacy.

It is understandable that the composition of the charging station and charging management device shown in the above FIG. 1 is merely an example. In actual situations, equipment or modules may be integrated, adjusted, or added as needed. For example, the charging station may further include a power supply system, which mainly provides power for charging equipment and may consist of primary equipment, e.g., switches, transformers, lines, etc., secondary equipment, e.g., detection, protection, and control devices, etc., source filter devices, etc., which is not limited by the present invention.

Based on the above charging system, the charging plan generation method provided by the present invention can be implemented.

Please refer to FIG. 2, FIG. 2 is a schematic flowchart of a charging plan generation method provided by an embodiment of the present invention; the power adjustment method shown in FIG. 2 may be executed by the charging management device, and the method may include:
S21 Acquire historical charging data.

The user needs to establish a communication connection with the charging management device to begin charging. In this process, the charging management device identifies the device identification code of the device to be charged and traces back the historical charging data of the device to be charged through the identification code.

In specific embodiments, the process for the charging management device to acquire historical charging data may be obtained by querying the corresponding historical charging data in a local database through the device identification code, or by querying the corresponding historical charging data in a cloud server through the device identification code, or directly sent to the charging management device by a user terminal after storing locally or requesting historical charging data from the cloud.

It should be noted that the device identification code is a unique encrypted number randomly generated by the charging management device, which serves as a unique identifier of the device to be charged. There is no need to collect the personal information of the user, and only historical charging data streams are processed in subsequent processes, which does not involve user privacy issues.

S22 Determine charging features on the basis of the historical charging data.

The charging features are obtained by processing historical charging data based on statistical methods, and specifically include two categories: charging preference features and intermediate auxiliary features. The charging preference features are used to characterize the charging performance parameters of the devices to be charged and the charging parameters related to user preferences. The intermediate auxiliary features, on the other hand, characterize other non-charging parameters related to user preferences. Though these non-charging parameters do not directly affect the charging process, they are influenced by user preferences and further impact the charging parameters of the user, thereby indirectly affecting the charging process.

In one embodiment, the charging preference parameters include average charging duration, and the intermediate auxiliary features include whether the charging date is a holiday, the charging frequency of the device, the duration since last charging, etc. When predicting the current charging duration, it is necessary to consider not only the recent average charging duration of the user, but also whether it is a holiday, the demand of the user for long-distance travel, the duration since last charging, whether the user needs a large amount of charging this time, etc.

It should be noted that the specific composition of the charging preference parameters and intermediate auxiliary features and the method for mining charging features from historical charging data will be described in detail later, and will not be discussed here.

S23 Determine charging prediction data on the basis of the charging features and a preset charging prediction model.

After mining the historical charging data to obtain charging features, combined with a preset charging prediction model, the charging features are input as model parameters to obtain the output charging prediction data.

In some embodiments, the charging prediction data includes predicted guaranteed electricity quantity and predicted charging electricity quantity, and the corresponding charging prediction models include a guaranteed electricity quantity prediction model and a charging electricity quantity prediction model. The charging prediction model is generated by training a machine learning algorithm combined with a training dataset, and the specific training method will be described in detail later, and will not be discussed here.

It should be noted that in some other embodiments, the charging prediction data may also include other data, such as the predicted power upper limit and predicted charging time of the device to be charged. The charging prediction model may not be used for some charging prediction data, but directly obtained by processing the charging features through statistical methods. For example, the predicted power upper limit value of the device to be charged can be directly used as the value of the maximum acceptable power in the charging features. The predicted charging time of the device to be charged can be obtained by weighted average of parameters such as the charging gun unplugging time, average staying duration, and average charging duration in the charging features.

S24 Generate a charging plan on the basis of the historical charging data and the charging prediction data.

The generation of the charging plan specifically includes: determining a preference type according to historical charging data and charging prediction data, then determining the most suitable target charging strategy model from a plurality of preset charging strategy models according to the preference type, and finally generating a matching charging plan according to the target charging strategy model.

In some embodiments, the generating the charging plan specifically includes determining a target charging strategy model according to the historical charging data and charging prediction data; and generating a charging plan according to the charging strategy model.

In the step of determining the target charging strategy model, the preference type of the user corresponding to the device to be charged is judged according to the historical charging data and charging prediction data, and the corresponding charging strategy model is determined according to the preference type of the user.

Specifically, the preference types of the user include a safety guarantee type, an energy-saving type, a price-sensitive type, and an efficiency-sensitive type. The demand of the users of the safety guarantee type is to maintain battery health so that the device to be charged has the maximum service life. The demand of the users of the energy-saving type is to charge as much as possible during an off-peak period of grid electricity consumption to maintain charging stability. The demand of the users of the price-sensitive type is to charge when the electricity price is relatively low to reduce the total charging cost. The demand of the users of the efficiency-sensitive type is to maintain a fast-charging mode to fully charge the battery, thereby improving the use efficiency of the device to be charged.

It can be understood that in some other embodiments, the preference types of the users may also include other types, such as a comprehensive fast-charging type, a balanced charging type, etc.

In some embodiments, the users of the safety guarantee type are matched with a safety guarantee charging strategy model, users of the energy-saving type are matched with an energy-saving charging strategy model, users of the price-sensitive type are matched with a cost-priority charging strategy model, and the users of the efficiency-sensitive type are matched with an efficiency-priority charging strategy model.

In the step of generating a charging plan according to the charging strategy model, it includes that the corresponding constraint condition and objective function are determined according to the charging strategy model, the optimal solution is calculated to achieve an extremum of the objective function under the constraint condition, and the charging plan is generated according to the calculation result.

In some embodiments, the safety guarantee charging strategy model calculates an optimal solution that makes a charging curve approach a standard charging curve under constraint conditions as the charging plan. The energy-saving charging strategy model calculates the optimal solution that makes the charging time avoid the charging peak time under constraint conditions as the charging plan. The cost-priority charging strategy model calculates the optimal solution that minimizes a total charging cost under constraint conditions as the charging plan. The efficiency-priority charging strategy model calculates the optimal solution that minimizes the charging time under constraint conditions as the charging plan.

The composition and determination method of charging features in the embodiments of the present invention will be described in detail below.

Specifically, the charging features include charging preference features and intermediate auxiliary features.

In one embodiment, the charging preference features include maximum charging electricity quantity, average charging electricity quantity, acceptable maximum charging power, average charging duration, mode of charging gun unplugging time, and average staying duration.

More specifically, the maximum charging electricity quantity is based on the charged electricity quantity of each order, and the maximum value of the charged electricity quantity in all historical orders is taken as the maximum charging electricity quantity.

The average charging electricity quantity is also based on the charged electricity quantity of each order. Three-time windows of recent 7 days, recent 30 days, and all historical charging time introduced, and the average of the charged electricity quantity of charging orders within each of the three-time windows is calculated to obtain the average charging electricity quantity.

It can be understood that among the three-time windows, the average charging electricity quantity within the recent 7 days has the highest characterization degree for the device to be charged, followed by the average charging electricity quantity within the recent 30 days, and finally the average charging electricity quantity in all historical charging time. When using the average charging electricity quantity as a charging feature, if there is charging data within the recent 7 days, the average charging electricity quantity within the recent 7 days is preferentially used. If there is no charging data within the recent 7 days, the average charging electricity quantity within the recent 30 days is used as the charging feature, and so on, which will not be repeated here.

In some other embodiments, before taking the average value of charging orders in the time window to obtain the average charging electricity quantity, data cleaning is also required to ensure data reliability. For example, the charged electricity quantity of all charging orders in the time window is sorted by the amount of electricity, the charged electricity quantity before 5% and after 95% in the sequence is excluded as abnormal values, and then the average value of the remaining charged electricity quantity after excluding abnormal values is excluded.

The acceptable maximum charging power is based on the maximum charging power of each order. Specifically, since the maximum charging power of AC charging piles and DC charging piles is completely different, it is necessary to group them according to AC charging piles and DC charging piles, and take the maximum charging power as the maximum charging power of AC charging piles and DC charging piles respectively.

It should be noted that when using the maximum charging power to generate a charging plan, it is necessary to first determine whether the charging device is an AC charging pile or a DC charging pile, and select the corresponding maximum charging power according to the type of charging pile.

It should also be noted that in some other embodiments, the maximum charging current can also be used as a charging feature for mining and processing, and the specific process is similar to that of the maximum charging power. A person skilled in the art can know the feature mining process of the maximum charging current according to the above mining and processing process of the maximum charging power, so it will not be repeated here.

The average charging duration is obtained by counting the charging duration of each order according to the begin time and end time of charging of the order, and taking the average value of the charging duration of all orders.

It can be understood that in some other embodiments, the average charging duration is also set with multiple time windows, and the average value of the charging duration of orders in the corresponding time window is taken as the average charging duration according to different time windows, which is not limited here.

It can also be understood that in some other embodiments, before taking the average value of the charging duration of orders, data cleaning is also required, such as excluding some abnormal data values, which is also not limited here.

Charging gun unplugging time is different from charging duration. After the device to be charged completes charging, it often does not unplug the gun immediately to disconnect, but only unplugs the gun to disconnect when the user needs to use the device to be charged. Therefore, the charging gun unplugging time can be used to characterize the staying time of the device to be charged in the charging station, thereby helping to predict the charging duration.

Specifically, the charging gun unplugging time is obtained by rounding the gun unplugging time of each historical charging order to the nearest 30-minute unit, and then taking the mode as the charging gun unplugging time.

The average staying duration is obtained by counting the charging staying duration of the user according to the begin time and charging gun unplugging time of each historical order, and averaging the staying durations of all historical orders to calculate the average staying duration.

It can be understood that in some embodiments, the average staying duration includes calculation in time windows and data cleaning before calculating the average value.

In one embodiment, the intermediate auxiliary feature includes parameters such as whether it is a holiday, average daily temporary charging gun unplugging times, duration since last charging, charging frequency, last charging electricity quantity, and whether the last charging reaches the full charge state.

Specifically, whether it is a holiday includes whether the day before charging is a holiday, whether the current day is a holiday, and whether tomorrow is a holiday, which are used as parameters of the guaranteed electricity quantity prediction model and the charging electricity quantity prediction model later.

The average daily temporary charging gun unplugging times is obtained by statistically analyzing the plugging and unplugging times of the charging gun in daily historical charging orders.

In specific embodiments, if the charging duration of a single order within a day is less than 30 minutes, and the charging gun unplugging time of the order and the charging gun plugging time of the next order of the same day are less than 10 minutes, it is judged that the order has a temporary charging gun unplugging behavior, and the average daily temporary charging gun unplugging times is obtained by dividing the number of orders with the temporary charging gun unplugging behavior by the total historical charging days.

The charging frequency is obtained by dividing the number of historical charging orders by the historical charging time. In specific embodiments, the charging frequency is also configured with time windows, such as the most recent 7 days, the most recent 30 days, and the total historical charging time, and the charging frequency is calculated separately based on the corresponding time window.

The duration since the last charge is measured in days, which counts the interval between the device to be charged and its most recent charging event.

The power of the last charging electricity quantity counts the charging electricity quantity of the most recent charging order for the device to be charged.

Whether the last charge reached a full charge state counts whether the device to be charged achieves a full charge in its most recent charging order.

Specifically, since the charging state of the device to be charged cannot be obtained in real time, whether the full charge state is reached is judged by analyzing the reported power of the last charging order.

In specific embodiments, if the reported power before the end of the charging time continuously decays to 0, it is judged that the device to be charged has reached the full charge state.

In some other embodiments, it can also be judged by analyzing the behavior of the user. For example, if the charging end time of the device to be charged is more than 1 hour earlier than the charging gun unplugging time, it is judged that the device to be charged has reached the full charge state.

The preset charging prediction model mentioned in the above embodiments will be described in detail below.

In some embodiments, the charging prediction model includes a guaranteed electricity quantity prediction model and/or a charging electricity quantity prediction model.

The generation method of the charging electricity quantity prediction model includes the following steps:
maximum charging electricity quantity and average charging electricity quantity of the charging features are determined as output label values;
a sample dataset is constructed according to the charging features; and
the charging electricity quantity prediction model is generated based on a binary classification algorithm according to the sample dataset.

Specifically, in the step of determining maximum charging electricity quantity and average charging electricity quantity of the charging features as output labels, since the charging electricity quantity prediction model adopts a classification algorithm rather than a clustering algorithm, the output value is a preset label value, and the classification label value needs to be set before training the model.

In specific embodiments, the maximum charging electricity quantity in the charging features is determined as label value 1, and the average charging electricity quantity is determined as label value 0. When the classification result is 1, the maximum charging electricity quantity is determined as the predicted charging electricity quantity; when the classification result is 0, the average charging electricity quantity is determined as the predicted charging electricity quantity.

It should be noted that when the average charging electricity quantity is determined as the predicted charging electricity quantity, the average charging electricity quantity is determined according to the priority of the above-mentioned time window. For example, if there is charging data within the recent 7 days, the average charging electricity quantity of the recent 7 days is used as the predicted charging electricity quantity; otherwise, the average charging electricity quantity of the recent 30 days is used as the predicted charging electricity quantity, and so on. Finally, the average charging electricity quantity of all historical orders is used as the predicted charging electricity quantity.

The step of constructing a sample dataset according to the charging features specifically includes the following steps:
the order deviation value is calculated, the sample type is determined according to the order deviation value, the parameters of the sample data are determined, and the sample dataset is constructed according to the sample type and parameters.

In the step of calculating the order deviation value, for each historical order, a first deviation value between the charging electricity quantity and the maximum charging electricity quantity of the order are calculated, and a second deviation value between the charging electricity quantity and the average charging electricity quantity of the order is calculated.

In the step of determining the sample type according to the order deviation value, it is judged whether an absolute value of the first deviation value is less than an absolute value of the second deviation value. If it is less than, the order is determined as a positive sample; if it is greater than, the order is determined as a negative sample.

In the step of determining parameters of sample data, since some charging features are highly correlated with charging electricity quantity, such as whether the above-mentioned charging date is a holiday and whether the last charging is full, etc., some charging features are selected to construct sample data to predict the predicted charging electricity quantity through the inherent correlation of the data.

In specific embodiments, parameters such as whether the current day is a holiday, whether the previous day is a holiday, whether tomorrow is a holiday, duration since last charging, charging frequency, last charging electricity quantity, and whether the last charging reaches the full charge state are selected to construct the sample data.

In the step of constructing a sample dataset according to sample types and parameters, the sample dataset includes a training sample set, a validation sample set, and a test sample set. Specifically, many positive samples and negative samples are extracted from all historical orders as the training sample set, and some positive samples and negative samples are synchronously extracted as the validation sample set and the test sample set.

In specific embodiments, 10,000 positive samples and 10,000 negative samples are selected in the training sample set, and 5,000 positive samples and 5,000 negative samples are selected in the validation sample set and the test sample set respectively.

In the step of generating the charging electricity quantity prediction model based on a binary classification algorithm according to the sample dataset, a preliminary charging electricity quantity prediction model is generated according to the binary classification algorithm, the training sample set is used to train the charging electricity quantity prediction model, the validation sample set is used to calibrate model parameters, and then the test sample set is used to test the precision rate.

In specific embodiments, the binary classification algorithm is based on an algorithm function directly called by a xgboost tool, a recall rate of the test sample set reaches 90%, and the precision rate reaches 86%.

It should be noted that the above model generation steps are brief description steps, and the actual model training and calibration steps are more complex and will not be elaborated here.

It should also be noted that the algorithm can be an algorithm tool directly called from an open-source database, such as xgboost, or an independently developed classification algorithm, which is not limited here.

In some other embodiments, the generation method of the guaranteed electricity quantity prediction model includes the following steps:
constructing a sample dataset according to the charging features; and
a plurality of clusters are determined based on a clustering algorithm according to the sample dataset; and
guaranteed electricity quantity of the clusters is determined according to features of the clusters to generate the guaranteed electricity quantity prediction model.

Specifically, constructing the sample dataset according to the charging features includes the following steps:
parameters of sample data are determined according to the charging features, the sample data is standardized, and a sample dataset is constructed.

In the step of determining parameters of sample data according to the charging features, it is necessary to determine the charging features associated with the guaranteed electricity quantity as parameters of the guaranteed electricity quantity prediction model. Specifically, the charging features used by the guaranteed electricity quantity prediction model include predicted charging electricity quantity, daily average unplugging times, and average staying duration, and sample data is constructed based on the above charging features.

In some embodiments, the sample data is standardized for subsequent clustering algorithms.

An appropriate amount of sample data is selected to construct a sample dataset to avoid an insufficient amount of sample data resulting in insufficient model accuracy or an excessive amount of data resulting in a complex processing process. Therefore, in the present embodiment, the sample dataset preferably includes a total of 20,000 sample data entries.

In the step of determining the guaranteed electricity quantity of the cluster according to the characteristics of the cluster to generate a guaranteed electricity quantity prediction model, the clustering algorithm divides the sample data into multiple clusters according to the characteristics of the sample dataset, and the number of clusters can be preset by the algorithm.

In some embodiments, the clustering algorithm is Density-Based Spatial Clustering of Applications with Noise (DBSCAN), and the DBSCAN algorithm divides the sample dataset into 5 categories, calculates an average value of parameters for each category, and the calculation results are as shown in the following table:

| Cluster Category | Number of Samples | Charging Electricity Quantity Label | Daily Average Unplugging Times | Average Staying Duration |
|---|---|---|---|---|
| 0 | 2360 | 1 | 0.538 | 0.249 |
| 1 | 9932 | 0 | 0.195 | 0.208 |
| 2 | 4078 | 0 | 0.271 | 0.816 |
| 3 | 2617 | 1 | 0.664 | 0.865 |
| 4 | 5053 | 1 | 0.264 | 0.763 |

Specifically in the present embodiment, according to the characteristics and categories of the clusters, cluster category 0 is identified as having high charging electricity quantity, high temporary charging gun pulls, and low staying duration, and high guaranteed electricity quantity is assigned to this cluster.

The cluster of category 1 is identified as having low charging electricity quantity, low temporary disconnection frequency, and low stay duration, and a medium minimum guaranteed electricity quantity is assigned to this cluster.

The cluster of category 2 is identified as having low charging electricity quantity, low temporary disconnection frequency, and long stay duration, and a high guaranteed electricity quantity is assigned to this cluster.

The cluster of category 3 is identified as having high charging electricity quantity, high temporary disconnection frequency, and long stay duration, and a high guaranteed electricity quantity is assigned to this cluster.

The cluster of category 4 is identified as having high charging electricity quantity, low temporary disconnection frequency, and long stay duration, and a low guaranteed electricity quantity is assigned to this cluster.

It should be noted that the specific values of high guaranteed electricity quantity, medium guaranteed electricity quantity, and low guaranteed electricity quantity can be adjusted according to actual conditions. In the present embodiment, the high guaranteed electricity quantity is assigned a value of 5 kWh, the medium guaranteed electricity quantity is assigned a value of 3 kWh, and the low guaranteed electricity quantity is assigned a value of 1 kWh.

It should also be noted that a person skilled in the art can make adaptive modifications to the algorithm used for clustering and the set number of clusters according to actual needs, and the above embodiment is for illustrative purposes only.

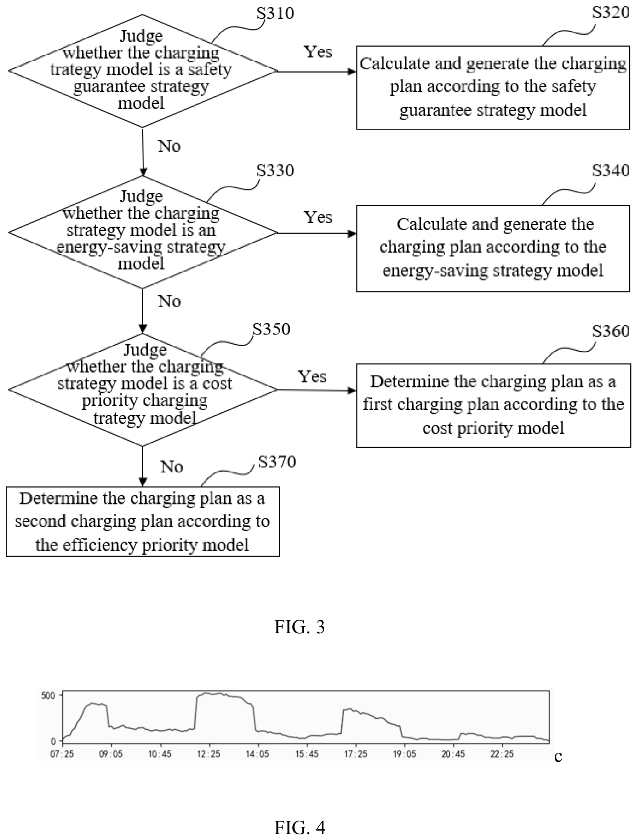

Please refer to FIG. 3. FIG. 3 is a schematic flowchart of generating a charging plan according to historical charging data and charging prediction data provided in an embodiment of the present invention, which specifically includes the following steps:
S310 Judge whether the charging strategy model is a safety guarantee strategy model;
S320 Generate a charging plan according to the safety guarantee strategy model;
S330 Judge whether the charging strategy model is an energy-saving strategy model;
S340 Generate a charging plan according to the energy-saving strategy model;
S350 Judge whether the charging strategy model is a cost priority charging strategy model;
S360 Determine the charging plan as a first charging plan according to the cost priority model.
S370 Determine the charging plan as a second charging plan according to the efficiency priority model.

The following is a detailed introduction to each step in generating a charging plan according to historical charging data and charging prediction data.

S310 Judge whether the charging strategy model is a safety guarantee strategy model, which includes the following steps:
S311 Determine a historical charging curve according to the historical charging data;
S312 Determine a first similarity between the historical charging curve and the standard charging curve;
S313 Judge whether the first similarity is greater than a preset first threshold;
S314 When the first similarity is greater than the first threshold, determine the target charging strategy model as the safety guarantee strategy model, and proceed to step S320.
S315 When the first similarity is less than the first threshold, proceed to step S330.

The following is a detailed description of each step in conjunction with an embodiment.

In step S311 of determining a historical charging curve according to historical charging data, the historical charging curve is determined by querying the charging process of each order according to the historical charging data of the device to be charged.

In specific embodiments, the historical charging curve is a charging curve of a State of Charge (SOC)-Power, that is, a graph of a relationship change between the battery state and the charging power during the charging process.

SOC can also be replaced by units such as Ah (ampere-hour) and kWh (kilowatt-hour), and Power can be replaced by units such as V (voltage).

In the step S312 of determining a first similarity between the historical charging curve and the standard charging curve, different devices to be charged have different performance parameters, and thus have different and unique standard charging curves. By comparing the historical charging curve obtained from each order with the standard charging curve, a proportion of the overlapping part of the two curves to the historical charging curve can be determined.

In some embodiments, the first similarity can be determined by averaging the overlapping proportion between the historical charging curve and the standard charging curve within a set time window.

In step S313 of judging whether the first similarity is greater than a preset first threshold, the first threshold is set to 90%. When the first similarity between the historical charging curve and the standard charging curve is greater than 90%, it can be determined that the user is a safety guarantee type user, and further, it can be determined that the charging strategy model is a safety guarantee strategy model, and proceed to step S320.

S320 Generate a charging plan according to the safety guarantee strategy model, which includes the following steps:
S321 Determine a charging curve estimation model according to the charging strategy model;
S322 Determine a predicted battery state value according to the charging curve estimation model;
S323 Generate a charging plan according to the predicted battery state value and the standard charging curve.

In step S321 of determining a charging curve estimation model according to the charging strategy model, when the charging strategy model is determined to be a safety guarantee strategy model, the charging curve estimation model corresponding to a device to be charged is determined.

In step S322 of determine a predicted battery state value according to the charging curve estimation model, a state value of the device to be charged at any time, that is, an SOC value, is predicted according to the charging curve estimation model combined with an acquired initial SOC value of the device to be charged.

In step S323 of generating a charging plan according to the predicted battery state value and the standard charging curve, the delivered power value is determined for each predicted moment according to the standard charging curve to enable the device to be charged to charge according to the standard charging curve and reduce loss of the device to be charged during the charging process.

It should be noted that the standard charging curve and the charging curve estimation model in the above embodiment are obtained by fitting test experimental data for each type of device to be charged.

S330 Judge whether the charging strategy model is an energy-saving strategy model, which includes the following steps:
S331 Determine a charging time distribution according to historical charging data;
S332 Determine a second similarity between the charging time distribution and a charging peak time distribution;
S333 Judge whether the second similarity is greater than a preset second threshold;
S334 When the similarity is less than the threshold, determine the target charging strategy model as an energy-saving strategy model.
S335 When the similarity is less than the threshold, proceed to step S350.

Specifically, in step S331 of determining a charging time distribution according to historical charging data, the charging time of each charging order is determined according to the historical charging data of the device to be charged, thereby determining the charging time distribution.

In some embodiments, the charging time of a certain charging order of a user is 19:00-6:00 the next day, that is, the charging time distribution is 19:00-0:00 and 0:00-6:00.

In step S332 of determining the second similarity between the charging time distribution and the charging peak time distribution, by comparing the charging time distribution with the charging peak time distribution of the corresponding charging station, the time overlap proportion between the charging time distribution and the charging peak time distribution of the order can be obtained, and the similarity can be determined by averaging the time overlap proportion within a set time window.

It should be noted that the charging peak time distribution of a charging station is determined by statistically analyzing the distribution of the charging power of the charging station at each moment.

Please refer to FIG. 4, FIG. 4 is a statistical diagram of time distribution of charging power of a charging station according to an embodiment of the present invention. As can be seen from the figure, the charging peak time distribution is in three-periods: 7:00 to 9:00,12:00 to 14:00, and 17:00 to 19:00.

In step S334 of when the similarity is less than the threshold, determining the target charging strategy model as an energy-saving strategy model, specifically, if the similarity between the charging time distribution and the charging peak time distribution of the user is lower than 10%, it can be judged that the user is deliberately avoiding the charging peak time for charging, the user is determined to be an energy-saving type user, and further, the charging strategy model can be determined to be an energy-saving strategy model, and proceed to step S340.

It should be noted that in some other embodiments, the order of steps S310 and S320 is opposite to that of steps S330 and S340, that is, it is first judged whether the charging strategy model is an energy-saving strategy model, and then it is judged whether the charging strategy model is a safety guarantee strategy model. That is, the order of steps S310 and S320 can be swapped with that of steps S330 and S340, and is not limited by the present embodiment.

S340 Generating a charging plan according to the energy-saving strategy model, which includes the following steps:
S341 Judge whether the charging period is a charging peak period;
S342 If so, determine the charging power of the charging period as a first power;
S343 If not, determine the charging power of the charging period as a second power; and
S344 Generate a charging plan according to the charging period and the charging power.

In step S342 of if so, determining the charging power of the charging period as a first power, and step S343 of if not, determining the charging power of the charging period as a second power, when the charging period is determined to be a charging peak period, priority is given to charging with a relatively low first power. When the charging period is determined to be a non-charging peak period, priority is given to charging with a relatively high second power.

In some embodiments, when the charging period is a charging peak period, the first power is set to 0, that is, no charging is performed on the device to be charged during the charging peak period.

In step S344 of generating a charging plan according to the charging period and charging power, the charging plan includes a continuous charging period, where part of the charging time is a charging peak period, during which charging is performed with the first power, and part of the charging time is a non-charging peak period, during which charging is performed with the second power.

S350 Judge whether the charging strategy model is a cost priority charging strategy model, which includes the following steps:
S351 Calculate a first charging cost based on a preset cost priority model according to the historical charging data and the charging prediction data;
S352 Calculate a second charging cost based on a preset efficiency priority model according to the historical charging data and the charging prediction data;
S353 Judge whether a difference between the first charging cost and the second charging cost is greater than a preset threshold.
S354 If greater than, determine the charging strategy model as the cost priority model, and proceed to step S360.
S355. If less than, determine the charging strategy model as the efficiency priority model, and proceed to step S370.

The step S351 of calculating a first charging cost based on a preset cost priority model according to the historical charging data and the charging prediction data specifically includes the following steps:
a first charging plan is generated based on the preset cost priority model according to the historical charging data and the charging prediction data; and the charging cost of the first charging plan is calculated to determine the first charging cost.

The step of generating the first charging plan based on a preset cost priority model according to historical charging data and charging prediction data will be described in detail later and will not be described here.

In the step of calculating the charging cost of the first charging plan and determining the first charging cost, after generating the first charging plan, the total charging cost is calculated according to the first charging plan in combination with the real-time charging electricity price of the charging station, and is determined as the first charging cost.

The step S352 of calculating the second charging cost based on a preset efficiency priority model according to historical charging data and charging prediction data includes: a second charging plan is generated based on a preset efficiency priority model according to historical charging data and charging prediction data; and the charging cost of the second charging plan is calculated, and the second charging cost is determined.

The step of generating a second charging plan based on the preset efficiency priority model according to the historical charging data and the charging prediction data includes: constraint conditions of the efficiency priority model are determined according to the historical charging data and the charging prediction data; and the second charging plan is generated based on a power load balancing allocation algorithm according to the constraint conditions.

Specifically, an objective function of the efficiency priority model is determined as minimizing the total charging time, so the solution is relatively simple. It only needs to consider load balancing allocation of the delivered power among charging stations, groups, charging piles, and charging guns, and after allocation, the delivered power is set in a fast-charging mode.

In specific embodiments, the power load balancing allocation algorithm includes any one of average allocation, weighted average, and first-come-first-served algorithms.

In the step of calculating the charging cost of the second charging plan and determining the second charging cost, after generating the second charging plan, the charging cost is calculated according to the second charging plan in combination with real-time charging electricity price of the charging station, and is determined as the second charging cost.

In step S354 of if greater than, determining the charging strategy model as the cost priority model, since the first charging cost is calculated by the cost priority model, the first charging cost is less than the second charging cost. When the difference between the first charging cost and the second charging cost is greater than a certain threshold, it can be judged that the first charging cost calculated based on the cost priority model is significantly less than the second charging cost calculated based on the efficiency priority model. Therefore, it is determined that the user of the device to be charged should be classified as a cost-sensitive customer, the adopted charging strategy model is the cost priority model, and proceed to step S360.

In step S355 of if less than, determining the charging strategy model as the efficiency priority model, when the difference between the first charging cost and the second charging cost is less than a certain threshold, it can be judged that the first charging cost calculated based on the cost priority model is not significantly less than the second charging cost calculated based on the efficiency priority model, so it is determined that the user of the device to be charged is not sensitive to the charging cost, and the user is classified as an efficiency-sensitive customer, and the adopted charging strategy model is the efficiency priority model, and proceed to step S370.

In some embodiments, the threshold is set to 5%. That is, when the cost reduction rate of the first charging cost compared with the second charging cost is higher than 5%, the cost priority model is determined to be used; when it is lower than 5%, the efficiency priority model is determined to be used.

In step S360 of determining the charging plan as a first charging plan according to the cost priority model, since the first charging plan and the second charging plan are generated first, and then the charging costs of the two are compared, the first charging plan has already been generated first, so only the first charging plan needs to be determined in this step.

It can be understood that the second charging plan in step S370 of determining the charging plan as a second charging plan according to the efficiency priority model is also based on the same principle, so it will not be repeated here.

The first charging plan generation method is described in detail below.

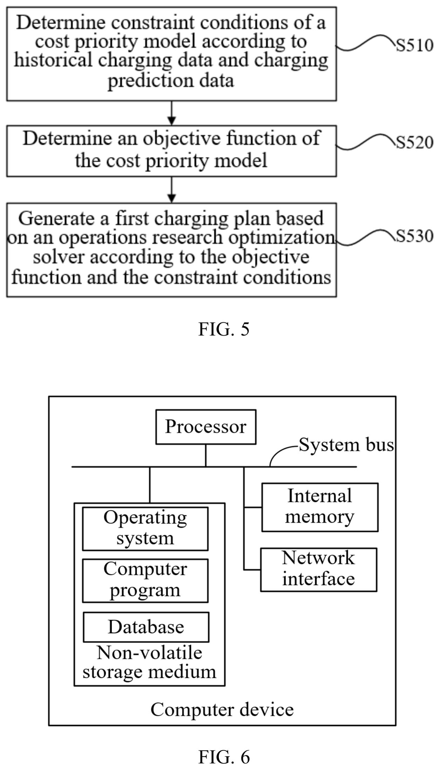

Please refer to FIG. 5, FIG. 5 is a schematic flowchart of a method for generating a first charging plan based on a preset cost priority model according to an embodiment of the present invention, which specifically includes:
S510 Determine constraint conditions of a cost priority model according to historical charging data and charging prediction data.
S520 Determine an objective function of the cost priority model.
S530 Generate a first charging plan based on an operations research optimization solver according to the objective function and the constraint conditions.

In step S510 of determining constraint conditions of a cost priority model according to historical charging data and charging prediction data, parameters used by the cost priority model include charging cost electricity price, beginning charging time, charging gun unplugging time, a predicted charging electricity quantity, a predicted guaranteed electricity quantity, predicted maximum receiving power, a charging station power upper limit value, a group power upper limit value, a charging pile power upper limit value, etc. The period from the beginning charging time to the charging gun unplugging time is split into time segments at intervals, for example, 5 minutes, and the delivered power corresponding to each time segment is set as an unknown variable.

In specific embodiments, based on the above parameters, the determined constraint conditions include:
constraint condition 1: the total power of the charging station in each time segment does not exceed the charging station power upper limit value;
constraint condition 2: the total power of the group in each time segment does not exceed the group power upper limit value;
constraint condition 3: the total power of the charging guns of the charging pile in each time segment does not exceed the charging pile power upper limit value;
constraint condition 4: the delivered power in each time segment does not exceed the predicted power upper limit value;
constraint condition 5: before the charged electricity quantity reaches the predicted guaranteed electricity quantity, charging is performed in a fast-charging mode; and
constraint condition 6: before the charged time reaches the charging gun unplugging time, the charged electricity quantity is greater than or equal to the predicted charging electricity quantity.

It should be noted that, in some embodiments, a person skilled in the art can adaptively adjust and modify the number or content of constraint conditions according to actual needs.

It should also be noted that, in some other embodiments, the constraint conditions are not only applied to the cost priority model, but also can be applied to the safety guarantee strategy model, the energy-saving strategy model and the efficiency priority strategy model.

In step S520 of determining an objective function of the cost priority model, according to that the strategy model corresponding to the device to be charged is the cost priority strategy model, the objective function of the cost priority model is determined to minimize the total charging cost.

In step S530 of generating a first charging plan based on an operations research optimization solver according to the objective function and the constraint conditions, an open-source or-tools is called to build a model and calculate the optimal solution according to the above objective function and the constraint conditions, and the optimal solution of the model is the first charging plan.

In specific embodiments, the first charging plan is output in the following format:
[ {"beginTime":"12:00","chargingUp":16.0},
{"beginTime":"14:00","chargingUp":0.0},
{"beginTime":"15:00","chargingUp":16.0}]

BeginTime refers to a time beginning point of the delivered power, and chargingUp refers to a delivered power value corresponding to the time beginning point. The actual charging power is controlled by scheduling the power value and delivered time to meet the charging electricity quantity demand of a customer under the condition of safe and stable charging without exceeding the power load, and achieve the effect of cost optimization at the same time.

More specifically, in the present embodiment, the period from 12:00 to 15:00 is a high-cost electricity price period, but since the initial charged electricity quantity does not reach the predicted guaranteed electricity quantity, charging is still performed in a fast-charging mode with a high current of 16 kW in the period from 12:00 to 14:00. At 14:00, the charged electricity quantity reaches the predicted guaranteed electricity quantity, and at this time, to meet the objective function of minimizing the total charging cost, charging is stopped to reduce the charging cost. After 15:00 is a low-cost electricity price period, and at this time, charging is resumed with a delivered power of 16 kW until the charged electricity quantity reaches the predicted charging electricity quantity.

The technical solution of the present invention can achieve the following technical effects: by mining and analyzing historical charging data, charging features characterizing charging actions of a user are obtained, and the charging demand of the user is predicted according to the charging features. In the process, personal privacy information of the user is not involved, and the blockage problem of difficulty in obtaining the charging demand of the user can be solved. Furthermore, by predicting user preferences, users are divided into groups, and diversified and targeted charging plans are generated for different user groups, solving the problem that existing charging strategies are difficult to meet the charging demands of different users.

The preference type of the user is predicted according to the charging features and the charging demand of the user is mined, and a corresponding customized charging plan is generated to meet the charging demand of the user.

Embodiments of the present invention also provide a computer-readable storage medium storing a computer program including program commands which, when executed by a computer, cause the computer to perform the method according to the preceding embodiments.

An embodiment of the present invention further provides an electronic device, including a memory, a processor, and a computer program stored in the memory and executable on the processor, where the processor implements the method according to the foregoing embodiment when executing the computer program.

In one embodiment, a computer device is provided, which may be a server, the internal structure of which may be as shown in FIG. 6. The computer device includes a processor, a memory, a network interface, and a database connected by a system bus. The processor of the computer device is configured to provide computing and control capabilities. The memory of the computer device includes a non-transitory storage medium and an internal memory. The non-transitory storage medium stores an operating system, a computer program, and a database. The internal memory provides an environment for the operation of the operating system and the computer program in the non-transitory storage medium. The database of the computer device is used to store data to be saved in the power adjustment method based on charging piles. The network interface of the computer device is used for communicating with an external terminal through a network connection. When the computer program is executed by the processor, the method according to the foregoing embodiment is implemented.

It will be understood by a person skilled in the art that all or part of the flows of the methods of the embodiments described above may be implemented by hardware instructions of a computer program, which may be stored in a non-transitory computer-readable storage medium, and when executed, may include the flows of the embodiments of the methods described above. Any reference to memory, storage, database or other media used in the embodiments provided in the present invention may include non-transitory and/or volatile memories. Non-transitory memory may include read only memory (ROM), programmable ROM (PROM), electrically programmable ROM (EPROM), electrically erasable programmable ROM (EEPROM), or flash memory. Volatile memory may include random access memory (RAM) or external cache memory. By way of illustration and not limitation, RAM is available in many forms such as static RAM (SRAM), dynamic RAM (DRAM), synchronous DRAM (SDRAM), double data rate SDRAM (DDRSDRAM), enhanced SDRAM (ESDRAM), Synchlink, DRAM (SLDRAM), Rambus direct RAM (RDRAM), direct rambus dynamic RAM (DRDRAM), and a memory bus dynamic RAM (RDRAM) or the like.

It will be clear to a person skilled in the art that, for convenience and conciseness of description, only the above-mentioned division of functional units and modules is exemplified, and in practice, the above-mentioned allocation of functions can be performed by different functional units and modules, i.e. dividing the internal structure of the apparatus into different functional units or modules, as required, to perform all or part of the functions described above.

The above embodiments are merely illustrative of the technical solutions of the present invention and are not intended to be limiting thereof; although the present invention has been described in detail referring to the foregoing embodiments, it will be understood by a person skilled in the art that modifications may be made to the technical solutions described in the foregoing embodiments or equivalents may be substituted for some of the technical features thereof; such modifications and substitutions do not depart from the spirit and scope of the embodiments of the present invention, and are intended to be included within the scope of the present invention.

## Claims

1. A charging plan generation method, **characterized by** comprising:
acquiring historical charging data;
determining charging features on the basis of the historical charging data;
determining charging prediction data on the basis of the charging features and a preset charging prediction model; and
generating a charging plan on the basis of the historical charging data and the charging prediction data.

2. The method according to claim 1, **characterized in that** the generating a charging plan on the basis of the historical charging data and the charging prediction data comprises:
determining a target charging strategy model according to the historical charging data and the charging prediction data; and
generating the charging plan according to the target charging strategy model.

3. The method according to claim 2, **characterized in that** the determining a target charging strategy model according to the historical charging data and the charging prediction data comprises:
calculating a first charging cost based on a preset cost priority model according to the historical charging data and the charging prediction data;
calculating a second charging cost based on a preset efficiency priority model according to the historical charging data and the charging prediction data;
judging whether a difference between the first charging cost and the second charging cost is greater than a preset threshold;
if greater than, determining the target charging strategy model as the cost priority model; and
if less than, determining the target charging strategy model as the efficiency priority model.

4. The method according to claim 3, **characterized in that** the calculating a first charging cost based on a preset cost priority model according to the historical charging data and the charging prediction data comprises:
generating a first charging plan based on the preset cost priority model according to the historical charging data and the charging prediction data; and
calculating the charging cost of the first charging plan to determine the first charging cost.

5. The method according to claim 4, **characterized in that** the generating a first charging plan based on the preset cost priority model according to the historical charging data and the charging prediction data comprises:
determining constraint conditions of the cost priority model according to the historical charging data and the charging prediction data;
determining an objective function of the cost priority model; and
generating the first charging plan based on an operations research optimization solver according to the objective function and the constraint conditions.

6. The method according to claim 5, **characterized in that** the determining constraint conditions of the cost priority model according to the historical charging data and the charging prediction data comprises:
determining, according to the charging prediction data, that the constraint conditions include at least one of:
delivered power being less than or equal to predicted receivable maximum power;
charging in a fast-charging mode when the charged electricity quantity is lower than predicted guaranteed electricity quantity; and
within the predicted charging time, the charged electricity quantity being greater than or equal to predicted charging electricity quantity;
wherein the charging prediction data includes the predicted receivable maximum power, the predicted guaranteed electricity quantity, the predicted charging time and the predicted charging electricity quantity.

7. The method according to claim 3, **characterized in that** the calculating a second charging cost based on a preset efficiency priority model according to the historical charging data and the charging prediction data comprises:
generating a second charging plan based on the preset efficiency priority model according to the historical charging data and the charging prediction data; and
calculating the charging cost of the second charging plan to determine the second charging cost.

8. The method according to claim 7, **characterized in that** the generating a second charging plan based on the preset efficiency priority model according to the historical charging data and the charging prediction data comprises:
determining constraint conditions of the efficiency priority model according to the historical charging data and the charging prediction data; and
generating the second charging plan based on a power load balancing allocation algorithm according to the constraint conditions.

9. The method according to claim 2, **characterized in that** the determining a target charging strategy model according to the historical charging data and the charging prediction data comprises:
determining a historical charging curve according to the historical charging data;
determining a first similarity between the historical charging curve and a standard charging curve;
judging whether the first similarity is greater than a preset first threshold; and
when the first similarity is greater than the first threshold, determining the target charging strategy model as a safety guarantee strategy model.

10. The method according to claim 9, **characterized in that** the generating the charging plan according to the target charging strategy model comprises:
determining a charging curve estimation model according to the charging strategy model;
determining a predicted battery state value according to the charging curve estimation model; and
generating the charging plan according to the predicted battery state value and the standard charging curve.

11. The method according to claim 2, **characterized in that** the determining a target charging strategy model according to the historical charging data and the charging prediction data comprises:
determining a charging time distribution according to the historical charging data;
determining a second similarity between the charging time distribution and a charging peak time distribution;
judging whether the second similarity is greater than a preset second threshold; and
when the second similarity is greater than the second threshold, determining the target charging strategy model as an energy-saving strategy model.

12. The method according to claim 11, **characterized in that** the generating the charging plan according to the target charging strategy model comprises:
judging whether a charging period is the charging peak period;
if so, determining the charging power of the charging period as first power;
if not, determining the charging power of the charging period as second power, wherein the first power is less than the second power; and
generating the charging plan according to the charging period and the charging power.

13. The method according to any one of claims 1 to 12, **characterized by** further comprising, before the determining charging prediction data on the basis of the charging features and a preset charging prediction model:
generating the charging prediction model;
wherein the charging prediction model comprises a guaranteed electricity quantity prediction model and/or a charging electricity quantity prediction model.

14. The method according to claim 13, **characterized in that** the generating the charging prediction model comprises:
determining maximum charging electricity quantity and average charging electricity quantity of the charging features as output label values;
constructing a sample dataset according to the charging features; and
generating the charging electricity quantity prediction model based on a binary classification algorithm according to the sample dataset.

15. The method according to claim 13, **characterized in that** the generating the charging prediction model comprises:
constructing a sample dataset according to the charging features; and
determining a plurality of clusters based on a clustering algorithm according to the sample dataset; and
determining guaranteed electricity quantity of the clusters according to features of the clusters to generate the guaranteed electricity quantity prediction model.

16. An electronic device, comprising a memory, a processor and a computer program stored in the memory and capable of running on the processor, wherein the processor, when executing the computer program, implements a method according to any one of claims 1 to 15.

17. A storage medium, storing a computer program, wherein the computer program, when executed by a processor, implements the method according to any one of claims 1 to 15.
